# EUROPEAN PATENT SPECIFICATION

(11) **EP 3 879 079 B1**
(45) Date of publication and mention of the grant of the patent: **02.08.2023**
(21) Application number: 21162201.4
(22) Date of filing: 12.03.2021
(51) Int. Cl.: F01D 25/16, F01D 25/28

(54) **TURBINE EXHAUST UNIT SUPPORTING DEVICE, TURBINE INCLUDING SAME, AND GAS TURBINE INCLUDING SAME**
STÜTZVORRICHTUNG FÜR TURBINENABGASEINHEIT, TURBINE DAMIT UND GASTURBINE DAMIT
DISPOSITIF DE SUPPORT D'UNITÉ D'ÉCHAPPEMENT DE TURBINE, TURBINE L'INCLUANT ET TURBINE À GAZ L'INCLUANT

(30) Priority: 13.03.2020 KR 20200031545
(43) Date of publication of application: 15.09.2021
(73) Proprietor: Doosan Enerbility Co., Ltd., Seongsan-gu Changwon-si, Gyeongsangnam-do 51711 (KR)
(72) Inventor: LEE, Young Do, 51632 Changwon-si, Gyeongsangnam-do (KR); YANG, Young Chan, 51628 Changwon-si, Gyeongsangnam-do (KR)
(74) Representative: BCKIP Part mbB

(56) References cited:
- CN-B- 106 907 243
- US-A1- 2018 320 555
- US-A1- 2019 085 730

## Description

### BACKGROUND OF THE INVENTION

### 1. Field of the Invention

The present disclosure relates to a turbine exhaust unit supporting device, a turbine including the same supporting device, and a gas turbine including the same turbine. More particularly, the present disclosure relates to a turbine exhaust unit supporting device having an improved structure to prevent thermal deformation of a turbine exhaust unit, a turbine including the same supporting device, and a gas turbine that employs the same supporting structure.

### 2. Description of the Background Art

A turbine is a rotary mechanical device that rotates by an impulse force or a reaction force to a flow of compressible fluid such as gas. Turbines are categorized into steam turbines using steam as the compressible fluid and gas turbines using hot combustion gas as the compressible fluid.

A gas turbine is mainly composed of a compressor section, a combustor section, and a turbine section. The compressor section includes a plurality of compressor vanes and a plurality of compressor blades alternately arranged in a compressor casing with an air inlet through which air is introduced.

The combustor section supplies fuel to the compressed air generated by the compressor section and ignites a fuel-air mixture with a burner to produce high-pressure hot combustion gas.

The turbine section includes a plurality of turbine vanes and a plurality of turbine blades alternately arranged in a turbine casing. A rotor extends through the centers of the compressor section, the combustor section, the turbine section, and an exhaust chamber.

The rotor is rotatably supported by bearings at respective axial ends thereof. A plurality of disks is fixed to the rotor so that a plurality of blades can be coupled thereto. An end of the rotor, which is present on the exhaust chamber side, is connected to a drive shaft of an electric generator or the like.

This gas turbine does not include a reciprocating mechanism such as a piston, which is usually present in a typical four-stroke engine. Therefore, it has no mutual frictional parts such as a piston-cylinder part, thereby consuming an extremely small amount of lubricating oil and reducing the operational movement range, resulting in high speed operability.

The operation of a gas turbine will be briefly described. Air is first compressed by a compressor and then the resulting compressed air is mixed with fuel. Then, the fuel-air mixture is burned to produce hot combustion gas and the hot combustion gas is ejected toward a turbine. The ejected combustion gas generates a rotary force by passing the turbine vanes and the turbine blades, thereby generating the rotor.

As described above, the hot high-pressure combustion gas is discharged outside through the exhaust unit after rotating the rotor. In this case, the exhaust unit undergoes thermal deformation due to the hot exhaust gas. Therefore, the structure that supports the exhaust unit suffers thermal stress, thereby being damaged. This also has a problem that the location of the exhaust unit is changed.

CN 106 907 243 B discloses gas turbine support structure including an exhaust device support assembly. The exhaust device support assembly comprises a support table with two lateral support legs, a bottom support frame and a joint bearing for supporting an exhaust device of a turbine. The two support legs are at one end pin-connected to the support table and at the other end coupled to the exhaust device. The bottom support frame has one end fixed to the support base and the other end extending toward the exhaust device to form a blind hole.

US 2018/320555 A1 discloses a support unit for a power unit including a supporting unit and a stress supporting unit. The supporting unit includes a second support which supports a rear part of a casing and includes an auxiliary support for receiving and supporting the weight of the casing. The stress supporting unit is disposed under the rear part of the casing and configured to receive heat from the casing and primarily absorb stress resulting from a thermal expansion of the casing. Stresses caused by the expansion are secondarily damped by the second support via the stress supporting unit.

### SUMMARY OF THE INVENTION

The present disclosure has been made to solve the problems occurring in the related art and an objective of the present disclosure is to provide a turbine exhaust unit supporting device that prevent breaking of a turbine exhaust unit by adaptively supporting the turbine exhaust unit while coping with thermal deformation of the turbine exhaust unit so that thermal stress occurring in the turbine exhaust unit is minimized. Other objectives of the present disclosure are to provide a turbine and a gas turbine that include the turbine exhaust unit supporting device.

In order to accomplish one objective of the present disclosure, there is provided a turbine exhaust unit supporting device that is installed at a rear end portion of a turbine casing and serves to support a turbine exhaust unit through which exhaust gas passing through a turbine is ejected, the turbine exhaust unit supporting device including: a casing supporting block unit installed on an external surface of the turbine casing; an exhaust unit supporting block unit spaced from the casing supporting block and installed on an external surface of the turbine exhaust unit; and a rotary coupler having a first end rotatably coupled to the casing supporting block unit and a second end rotatably coupled to the exhaust unit supporting block unit.

The casing supporting block unit may include a casing supporting block fixed along an external circumference of the turbine casing and a pair of casing holding protrusions protruding from one surface of the casing supporting block.

The exhaust unit supporting block unit may include an exhaust unit supporting block fixed along an external circumference of the turbine exhaust unit, and an exhaust unit fixing piece protruding toward the turbine casing from one side surface of the exhaust unit supporting block. A first connection hole may be formed to extend through the casing fixing piece, and a second connection hole may be formed to extend through the exhaust unit fixing piece. The rotary coupler may include: a connection rod respective ends of which are provided with a first bolt hole and a second bolt hole that respectively communicate with the first connection hole and the second connection hole; a first connection pin inserted into the first connection hole and the first bolt hole; and a second connection pin inserted into the second connection hole and the second bolt hole.

The device further includes a first pin fixing nut and a second pin fixing nut respectively disposed at a first end of the first connection pin and a first end of the second connection pin and configured to respectively fix the first connection pin and the second connection pin. The exhaust unit supporting block may include: a length fixing block elongated along a longitudinal direction of the turbine exhaust unit and fixed to the turbine exhaust unit at a first end thereof; and an outer periphery fixing block extending in a circumferential direction of the turbine exhaust unit from a second end of the length fixing block.

The exhaust unit fixing piece may include: an outer periphery fixing piece fixed to the outer periphery fixing block at a first end thereof and configured to protrude toward the turbine exhaust unit; a length fixing piece protruding in a longitudinal direction of the turbine exhaust unit from a second end of the outer periphery fixing piece; and a connection piece formed at a first end of the length fixing piece and connected to the connection rod. The length fixing piece may include: a triangular horizontal supporting plate coupled to the outer periphery piece at a first end thereof and a vertical supporting plate perpendicularly coupled to an exhaust side of the horizontal supporting plate.

Preferably, the device may further include a stopper formed at a lower surface of the connection rod to limit a rotation angle of the connection rod. One side of the stopper is coupled to the connection rod and the other side of the stopper is coupled to a lower surface of the vertical supporting plate.

In order to accomplish another objective of the present disclosure, there is provided a turbine for generating a driving force used for generation of electric power by allowing combustion gas supplied from a combustor to pass therethrough. The turbine includes: multiple turbine rotors including multiple turbine disks and multiple turbine blades coupled to an outer surface of each of the multiple turbine disks; multiple turbine vanes disposed between the multiple blades; a turbine casing configured to accommodate the turbine rotors mounted in multiple stages on an outer circumferential surface of a tie rod and rotated by the combustion gas supplied from the combustor during operation of a gas turbine and the turbine vanes guiding a flow of the combustion gas; a turbine exhaust unit coupled to one side of the turbine casing and configured to discharge the combustion gas passing through the turbine rotor; and a turbine exhaust unit supporting device. The turbine exhaust unit supporting device includes: a casing supporting block unit installed on a circumferential surface of the turbine casing; an exhaust unit supporting block unit spaced from the casing supporting block unit and installed on an outer circumferential surface of the turbine exhaust unit; and a rotary coupler having a first end rotatably coupled to the casing supporting block unit and a second end rotatably coupled to the exhaust unit supporting block unit.

In order to accomplish a further objective of the present disclosure, there is provided a gas turbine including: a compressor that takes in air and compresses the air to produce compressed air; a combustor for burning fuel using the compressed air supplied from the compressor; and a turbine. The turbine includes: a turbine rotor including multiple turbine disks and multiple turbine blades coupled to an outer surface of each of the multiple turbine disks; multiple turbine vanes disposed between the multiple blades; a turbine casing configured to accommodate the turbine rotor mounted in multiple stages on an outer circumferential surface of a tie rod and rotated by the combustion gas supplied from the combustor during operation of the gas turbine and the turbine vanes guiding a flow of the combustion gas; a turbine exhaust unit coupled to one side of the turbine casing and configured to discharge the combustion gas passing through the turbine rotor; a turbine exhaust unit supporting device. The turbine exhaust unit supporting device includes: a casing supporting block unit installed on a circumferential surface of the turbine casing; an exhaust unit supporting block unit spaced from the casing supporting block unit and installed on an outer circumferential surface of the turbine exhaust unit; and a rotary coupler having a first end rotatably coupled to the casing supporting block unit and a second end rotatably coupled to the exhaust unit supporting block unit.

According to the present disclosure, the turbine exhaust unit supporting device can support a turbine exhaust unit while coping with thermal deformation of the turbine exhaust unit, thereby preventing breaking of the turbine exhaust unit attributable to the thermal deformation of the turbine exhaust unit during operation of a turbine.

### BRIEF DESCRIPTION OF THE DRAWINGS

FIG. 1 is a cross-sectional view schematically illustrating the structure of a gas turbine to which one embodiment of the present disclosure is applicable;
FIG. 2 is an exploded perspective view of a turbine disk of components illustrated in FIG. 1;
FIG. 3 is a perspective view of a turbine exhaust unit supporting device according to a first embodiment of the present disclosure;
FIG. 4 is a configuration diagram illustrating a coupling structure among a casing supporting block unit, an exhaust unit supporting block unit, and a rotary coupler, according to the first embodiment of the present disclosure;
FIG. 5 is a perspective view of a turbine exhaust unit supporting device according to a second embodiment of the present disclosure; and
FIG. 6 is a front elevation illustrating a turbine to which a second embodiment of the present disclosure is applicable.

### DETAILED DESCRIPTION OF THE DISCLOSURE

Hereinafter, exemplary embodiments of the present disclosure will be described with reference to the accompanying drawings.

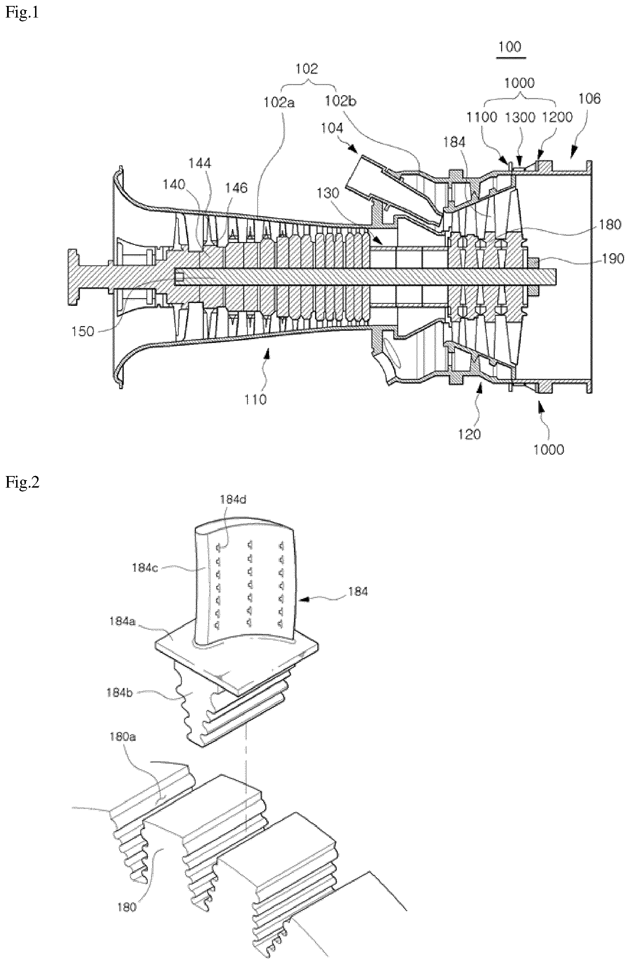

FIG. 1 illustrates an example of a gas turbine 100 according to the present disclosure. The gas turbine 100 includes a casing 102, and the casing 102 is composed of a compressor casing 102a and a turbine casing 102b. A diffuser that is a turbine exhaust unit 106 through which combustion gas passing through a turbine is ejected is provided at the rear side of the casing 102. A combustor 104 that burns a mixture of fuel and compressed air is disposed at the front side of the diffuser.

In a direction in which air flows, a compressor 110 is positioned on the upstream side of the casing 102 and a turbine 120 is positioned on the downstream side of the casing 102. In addition, a torque tube 130 serving as a torque deliverer for transferring torque generated by the turbine 120 to the compressor 110 is installed between the compressor 110 and the turbine 120.

The compressor 110 includes a plurality of (for example, 14) compressor rotor disks 140, each of which is fastened to each other by a tie bolt 150 so as not to be separated from each other in the axial direction.

Specifically, the compressor rotor disks 140 are arranged in the axial direction, with the tie bolt 150 extending through the central holes of the compressor rotor disks 140. Here, each of the adjacent compressor rotor disks 140 is arranged such that the opposing surfaces of the adjacent compressor rotor disks are in tight contact with each other by being pressed by the tie bolt 150. Therefore, the compressor rotor disks 140 cannot rotate in relative to each other because of this arrangement.

A plurality of compressor blades 144 is radially coupled to the outer circumferential surface of each of the compressor rotor disks 140. Each of the compressor blades 144 has a root member 146 that is coupled to the compressor rotor disk 410.

Compressor vanes (not illustrated) are fixed to the inner circumferential surface of the casing and are positioned between each of the compressor rotor disks 140. The compressor vanes do not rotate because the compressor vanes are fixed unlike the compressor rotor disks. The vanes align and guide the flow of the compressed air passing by the blades of an upstream compressor rotor disk so that the well aligned flow of the compressed air flows to the blades of a downstream compressor rotor disk.

There are two types for the root member 146: tangential and axial. Any one of the coupling types is selected according to the structure of a gas turbine. The root member has a dove tail structure or a fir-tree structure. Alternatively, the compressor blades can be coupled to the compressor rotor disks by means of different types of coupling members, such as a key or a bolt.

The tie bolt 150 is arranged to extend through the central holes of the compressor rotor disks 140 and the central holes of the turbine rotor disks 180. One end of the tie bolt 150 is fastened in the central hole of the most upstream compressor rotor disk and the other end is engaged with a fixing nut 190.

The shape of the tie bolt 150 varies according to the type of a gas turbine. Therefore, it should be noted that the shape of the tie bolt 150 is not limited to the example illustrated in FIG. 1. There are largely three types of tie rods: a single-type in which a single tie rod extends through the centers of all of the rotor disks; a multi-type in which multiple tie rods are arranged in a circumferential direction; and a complex type in which the single-type and the multi-type are combined.

Although not illustrated in the drawings, the compressor of the gas turbine is provided with a guide vane next to the diffuser. The guide vane adjusts the flow angle of a high-pressure fluid exiting the compressor and flowing into the combustor such that the actual flow angle of the fluid matches with the designed flow angle. The guide vane is generally referred to as a deswirler.

The combustor 104 mixes compressed air with fuel and burns the air-fuel mixture to produce hot high-pressure combustion gas. The combustion gas is heated under constant pressure so that the temperature of the combustion gas is increased to a heat-resistant temperature of the components of the combustor and the components of the turbine.

The combustor section of the gas turbine includes multiple combustors that are positioned in respective cells provided in a combustor casing. Each combustor includes a burner having fuel injection nozzles and the like, a combustor liner defining a combustion chamber, and a transition piece serving as a coupler between the combustor and the turbine.

Particularly, the combustor liner defines the combustion chamber in which the fuel injected through the fuel injection nozzle and the compressed air fed from the compressor are mixed and burned. The liner includes: a flame tube providing the combustion chamber in which the fuel-air mixture is burned; and a flow sleeve that surrounds the flame tube to define an annular space provided around the flame tube. A fuel nozzle assembly is coupled to a front end (i.e., upstream end) of the combustor liner, and a spark igniter plug is coupled to the flank surface of the combustor liner.

The transition piece is coupled to a rear end (i.e., downstream end) of the combustor liner to deliver the combustion gas, produced in the combustion chamber after the flame is started by the spark igniter plug, to the turbine section. In order to prevent the transition piece from being damaged by the heat of the hot high-pressure combustion gas, a portion of the compressed air is fed from the compressor to the outer wall of the transition piece so that the outer wall of the transition piece can be cooled.

To this end, the transition piece is provided with cooling holes through which the compressed air is blown into the transition piece. The compressed air first cools the inside of the main body of the transition piece and then flows toward the liner to cool the combustor.

The coolant used for cooling the transition piece then flows to the combustor liner through the annular space. A portion of the compressed air is externally introduced into the annular space through cooling holes formed in the flow sleeve and this air collides against the outer surface of the combustor liner.

The hot high-pressure combustion gas ejected from the combustor is introduced into the turbine 120. In the turbine, the supplied hot high-pressure combustion gas expands and gives a reaction force or impulse force to the rotating blades of the turbine to generate a torque. A portion of the torque is transmitted to the compressor via the torque tube described above, and the remaining portion which is the excessive torque is used to drive an electric generator or the like.

The turbine is substantially similarly structured to the compressor. That is, the turbine 120 includes a turbine rotor, turbine vanes, and a turbine casing.

The turbine rotor is rotated by the combustion gas supplied from the combustor during operation of the gas turbine. The turbine rotor includes multiple turbine blades 184 and multiples turbine rotor disks 180 that are arranged in multiple stages and put on a tie rod. The turbine rotor disks are similarly structured to the compressor rotor disks. The multiple turbine blades 184 are radially coupled to the outer circumferential surface of each turbine rotor disk 180. The turbine blades 184 are coupled to a corresponding one of the turbine rotor disks in a dovetail coupling manner. In addition, multiple vanes (not illustrated) are fixed to the inner circumferential surface of the turbine casing and are provided between the blades 184 of the adjacent turbine rotor disks 180 to control the direction of the flow of the combustion gas passing through the blades.

The turbine casing accommodates the turbine rotor disks and the turbine vanes.

Referring to FIG. 2, the turbine rotor disk 180 has a substantial disk shape and is provided with multiple coupling slots along the outer circumferential surface thereof. Each of the coupling slots 180a has a curved internal surface having a fir-tree contour.

The turbine blades 184 are respectively coupled to the respective coupling slots 180a. Referring to FIG. 2, each of the turbine blades 184 has a flat-plate-shaped platform member 184a at the center thereof. The side surfaces of the adjacent platform members 184a of the turbine blades are in tight surface contact with each other to maintain the spacing between the adjacent turbine blades 184. The bottom of each platform member 184a is provided with a root member 184b. Preferably, each of the root members 184b is of an axial-type so that each of the root members 184 is inserted in an axial direction into a corresponding one of the coupling slots 180a arranged along the outer circumferential surface of the turbine rotor disk 180.

Each of the root members 184b has a substantially fir-tree-shaped curved contour so as to be engageable with a correspondingly-shaped coupling slot. Here, the root member 1141 of the turbine blade does not necessarily have a fir-tree shape. The root member may have a dovetail shape.

The top of each platform member 184a is provided with a blade member 184c. The blade member 184c has an optimized airfoil shape according to the specifications of the gas turbine. The blade member 184c has a leading edge on the upstream side in the flow direction of the combustion gas and a trailing edge on the downstream side.

Unlike the compressor blades, the turbine blades are directly exposed to hot high-pressure combustion gas. Since the combustion gas is so hot to have a temperature of about 1700°C, a cooling means for cooling the turbine blades is required. To this end, the turbine section is provided with a cooling passage into which a portion of the compressed air produced by the compressor is bled.

The cooling passage is an external passage that extends from the outside the turbine casing, an internal passage that extends through the turbine rotor disk, or a combined passage composed of the external passage and the internal passage. As illustrated in FIG. 2, multiple film cooling holes 184d are formed on the surface of the blade member, and the film cooling holes 184d are formed to communicate with cooling fluid channels formed in the blade member 184c. The cooling fluid channels serve as flow paths for supplying cold air to the surface of the blade member 184c.

The turbine exhaust unit supporting device 1000 is installed between the turbine casing and the diffuser, which is a turbine exhaust unit through which combustion gas is discharged outside, to fix the turbine exhaust unit 106.

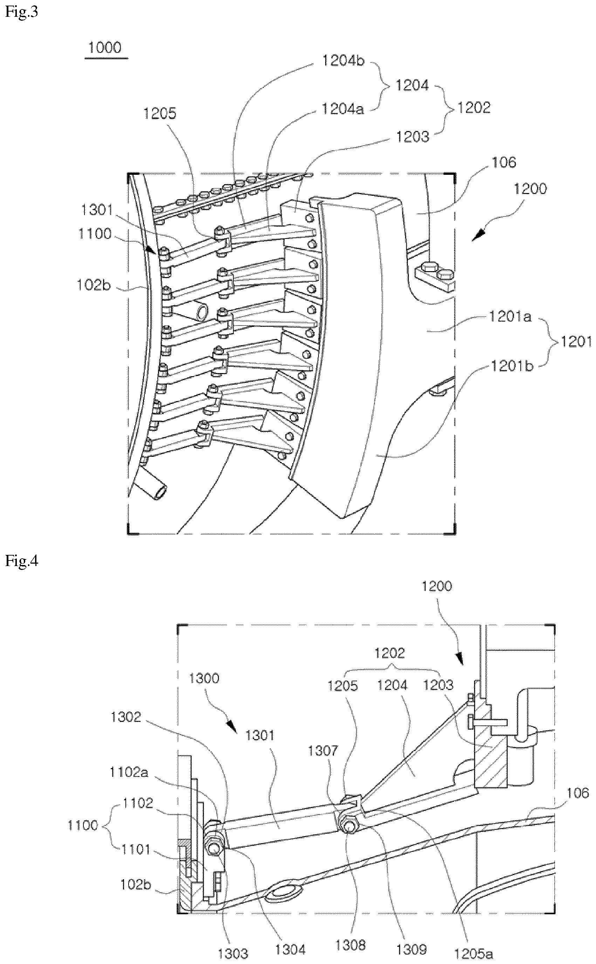

FIG. 3 is a perspective view of a turbine exhaust unit supporting device according to a first embodiment of the present disclosure, and FIG. 4 is a configuration diagram illustrating a coupling structure among a casing supporting block unit, an exhaust unit supporting block unit, and a rotary coupler, according to the first embodiment of the present disclosure.

Referring to FIGS. 3 and 4, the turbine exhaust unit supporting device 1000 according to the first embodiment of the present disclosure includes a casing supporting block unit 1100, an exhaust unit supporting block unit 1200, and a rotary coupler 1300.

In the present disclosure, the turbine exhaust unit 106 is installed at the rear end of the turbine casing and discharges exhaust gas passing through the turbine. The turbine exhaust unit 106 is implemented with the diffuser to reduce the speed of discharge of the exhaust gas.

The turbine exhaust unit supporting device 1000 is disposed between the turbine casing 102b and the turbine exhaust unit106. Thus, one end of the turbine exhaust unit supporting device 1000 is coupled to the turbine casing 102b and the remaining end is coupled to the turbine exhaust unit 106 so that the turbine casing 102b and the turbine exhaust unit 106 are connected to each other.

The casing supporting block unit 1100 is installed on the turbine casing 102b and is composed of multiple casing supporting blocks 1101 and multiple casing fixing pieces 1102.

The multiple casing supporting blocks 1101 are fixedly arranged along the outer periphery of the turbine casing 102b. Two casing fixing pieces 1102 protrude from respective sides of each of the casing supporting blocks 1101. The two casing fixing pieces 1102 are spaced from each other. One end of a connection rod 1301 to be described later is inserted and coupled between the two casing fixing pieces 1102. A first connection hole 1102a is installed to extend through the casing fixing piece 1102.

The exhaust unit supporting block unit 1200 is installed on the outer periphery of the turbine exhaust unit 106. The exhaust unit supporting block unit 1200 is spaced apart from the casing supporting block unit 1100, and one end of the exhaust unit supporting block unit 1200 is fixed to the turbine exhaust unit 106.

The exhaust unit supporting block unit 1200 includes multiple exhaust unit supporting blocks 1201 and multiple exhaust unit fixing pieces 1202. The multiple exhaust unit supporting blocks 1201 are fixedly arranged along the outer periphery of the turbine exhaust unit 106.

The exhaust unit supporting block 1201 includes a length fixing block 1201a and an outer periphery fixing block 1201b. One end of the length fixing block 1201a is fixed to the turbine exhaust unit 106 and is formed to be elongated along the longitudinal direction of the turbine exhaust unit 106. The exhaust unit supporting block 1201 has an overall "T" shape.

Each exhaust unit fixing piece 1202 protruding toward the turbine casing is formed one side surface of the exhaust unit supporting block 1201. A second connection hole 1205b is installed to extend through the exhaust unit fixing piece 1202.

The exhaust unit fixing piece 1202 is composed of an outer periphery fixing piece 1203, a length fixing piece 1204, and a connection piece 1205. One end of the outer periphery fixing piece 1203 is fixed to the outer periphery fixing block 1201b and is formed to protrude toward the turbine exhaust unit. The length fixing piece 1204 protrudes from the remaining end of the outer periphery fixing piece 1203 and extends in the longitudinal direction of the turbine exhaust unit. The length fixing piece 1204 is composed of a horizontal support plate 1204a having a triangular panel shape and a vertical support plate 1204b. One end of the horizontal support plate 1204a is coupled to the outer periphery fixing piece 1203, and the vertical support plate 1204b is vertically coupled to one end of the horizontal support plate 1204a. The horizontal support plate 1204a is formed in a triangular panel shape to have high strength.

The connection piece 1205 is formed at one end of the length fixing piece 1204 and has the second connecting hole 1205a in the center thereof. The connection piece 1205 is coupled to the connection rod 1301.

The rotary coupler 1300 is formed between the casing supporting block unit 1100 and the exhaust unit supporting block unit 1200, and the respective ends of the rotary coupler 1300 are coupled to the casing supporting block unit 1100 and the exhaust unit supporting block unit 1200, respectively.

The rotary coupler 1300 includes a connection rod 1301, a first connection pin 1303 and a second connection pin 1308. First and second ends of the connection rod 1301 are provided with first and second bolt holes 1302 and 1307, respectively. The first bolt hole 1302 is formed to communicate with the first connection hole 1102a, and the second bolt hole 1307 is formed to communicate with the second connection hole 1205a.

The first connection pin 1303 is inserted into the first bolt hole 1302 and the first connection hole 1102a so that the connection rod 1301 and the casing fixing piece 1102 are rotatably connected to each other.

A first pin fixing nut 1304 is engaged with a first end of the first connection pin 1303 to prevent the first connection pin 1303 from being removed from the first bolt hole 1302 and the first connection hole 1102a. The first pin fixing nut 1304 and the first connection pin 1303 are screwed together.

The second connection pin 1308 is inserted into the second bolt hole 1307 and the second connection hole 1205a so that the connection rod 1301 and the exhaust unit fixing piece 1202 are rotatably connected to each other.

A second pin fixing nut 1309 is engaged with a first end of the second connection pin 1308 to prevent the second connection pin 1308 from being removed from the second bolt hole 1307 and the second connection hole 1205a. The second pin fixing nut 1309 and the second connection pin 1308 are screwed together.

In the turbine exhaust unit supporting device 1000, when the exhaust unit is thermally deformed due to the heat of hot exhaust gas when the hot exhaust gas is discharged through the turbine exhaust unit, the turbine exhaust unit may be displaced in a radial direction of the turbine casing by the rotation of the connecting rod. Therefore, the supporting device 1000 minimizes thermal stress occurring in the turbine exhaust unit, thereby preventing the turbine exhaust unit from breaking.

In addition, the turbine exhaust unit supporting device can prevent the turbine exhaust unit from being removed from the turbine casing by maintaining a constant position in the axial direction of the turbine exhaust unit.

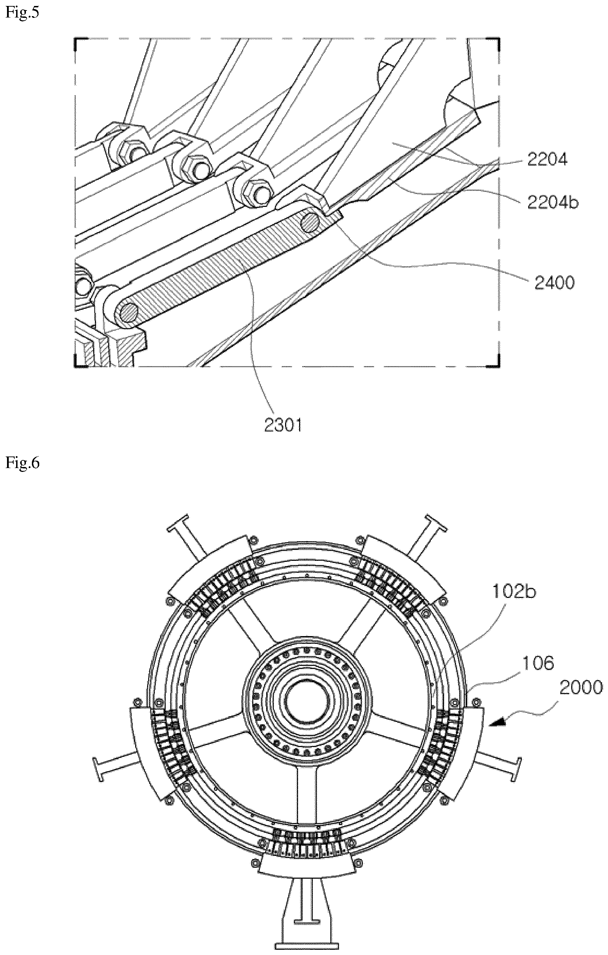

FIG. 5 is a perspective view of a turbine exhaust unit supporting device according to a second embodiment of the present disclosure, and FIG. 6 is a front view of a turbine to which the second embodiment of the present disclosure is applicable.

Referring to FIGS. 5 and 6, a turbine exhaust unit supporting device 2000 according to a second embodiment of the present disclosure includes a casing supporting block unit 1100, an exhaust unit supporting block unit, a rotary coupler, and a stopper 2400.

The casing supporting block unit, the exhaust unit supporting block unit, and the rotary coupler of the turbine exhaust unit supporting device according to the second embodiment of the present disclosure have the same construction as those of the turbine exhaust unit supporting device according to the first embodiment described above. Therefore, in connection with the second embodiment, those components will not be described and only the stopper will be described in detail below.

The stopper 2400 is formed to protrude from the lower surface of one end of the connection rod 2301. One side of the stopper 2400 is coupled to the connection rod 2301, and the other side is in contact with the lower surface of a vertical supporting plate 2204b of the length fixing piece 2204.

One end of the stopper 2400 is in contact with the lower surface of the vertical supporting plate 2204b so that the connecting rod 2301 moves only in a direction in which the radius of the turbine exhaust unit 106 increases. Accordingly, even though thermal expansion and contraction are repeated, the centering of the turbine exhaust unit 106 with respect to the turbine casing 102b can be maintained.

While the present disclosure has been described with reference to exemplary embodiments, those skilled in the art will appreciate that the exemplary embodiments are presented only for illustrative purposes and the present disclosure is not limited to the disclosed exemplary embodiments. On the contrary, it will be understood that various modifications and equivalents thereof are possible. Accordingly, the true technical protection scope of the present invention should be determined by the appended claims.

## Claims

1. A turbine exhaust unit supporting device (1000, 2000) installed at a rear side of a turbine casing (102b) to support a turbine exhaust unit (106) through which exhaust gas passing through a turbine (120) is discharged, the supporting device (1000, 2000) comprising:
a casing supporting block unit (1100) installed on an outer circumferential surface of the turbine casing (102b);
an exhaust unit supporting block unit (1200) spaced from the casing supporting block unit (1100) and installed on an outer circumferential surface of the turbine exhaust unit (106); and
a rotary coupler (1300) having a first end rotatably coupled to the casing supporting block unit (1100) and a second end rotatably coupled to the exhaust unit supporting block unit (1200).

2. The device (1000, 2000) according to claim 1, wherein the casing supporting block unit (1100) comprises a casing supporting block (1101) fixed along an external circumference of the turbine casing (102b) and a pair of casing fixing pieces (1102) protruding from one side surface of the casing supporting block (1101).

3. The device (1000, 2000) according to any one of the preceding claims, wherein the exhaust unit supporting block unit (1200) comprises an exhaust unit supporting block (1201) fixed along an external circumference of the turbine exhaust unit (106), and an exhaust unit fixing piece (1202) protruding toward the turbine casing (102b) from one side surface of the exhaust unit supporting block (1201).

4. The device (1000, 2000) according to claim 3, insofar as dependent on claim 2, wherein a first connection hole (1102a) is formed to extend through the casing fixing pieces (1102),
a second connection hole (1205a, 1205b) is formed to extend through the exhaust unit fixing piece (1202),
the rotary coupler (1300) includes a connection rod (1301, 2301) respective ends of which are provided with a first bolt hole (1302) and a second bolt hole (1302, 1307) that respectively communicate with the first connection hole (1102a) and the second connection hole (1205a, 1205b),
a first connection pin (1303) inserted into the first connection hole (1102a) and the first bolt hole (1302), and
a second connection pin (1308) inserted into the second connection hole (1205a, 1205b) and the second bolt hole (1302, 1307).

5. The device (1000, 2000) according to claim 4, further comprising a first pin fixing nut (1304) and a second pin fixing nut (1309) respectively disposed at a first end of the first connection pin (1303) and a first end of the second connection pin (1308) and configured to respectively fix the first connection pin (1303) and the second connection pin (1308).

6. The device (1000, 2000) according to any one of claims 3 to 5, wherein the exhaust unit supporting block (1201) comprises: a length fixing block (1201a) elongated along a longitudinal direction of the turbine exhaust unit (106) and fixed to the turbine exhaust unit (106) at a first end thereof; and an outer periphery fixing block (1201b) extending in a circumferential direction of the turbine exhaust unit (106) from a second end of the length fixing block (1201a).

7. The device (1000, 2000) according to claim 6, wherein the exhaust unit fixing piece (1202) comprises: an outer periphery fixing piece (1203) fixed to the outer periphery fixing block (1201b) at a first end thereof and configured to protrude toward the turbine exhaust unit (106); a length fixing piece (1204, 2204) protruding in a longitudinal direction of the turbine exhaust unit (106) from a second end of the outer periphery fixing piece; and a connection piece (1205) formed at a first end of the length fixing piece (1204, 2204) and connected to the connection rod (1301, 2301).

8. The device (1000, 2000) according to claim 7, wherein the length fixing piece (1204, 2204) comprises: a triangular horizontal supporting plate coupled to the outer periphery piece at a first end thereof and a vertical supporting plate (2204b) perpendicularly coupled to an exhaust side of the horizontal supporting plate.

9. The device (2000) according to any one of the preceding claims, further comprising a stopper (2400) formed at a lower surface of the connection rod (2301) to limit a rotation angle of the connection rod (2301).

10. The device (2000) according to claim 9, wherein one side of the stopper (2400) is coupled to the connection rod (2301), and the other side of the stopper (2400) is in contact with a lower surface of the vertical supporting plate (2204b).

11. A turbine (120) configured to generate a driving force to be used for generation of electric power by allowing a combustion gas supplied from a combustor (104) to pass therethrough, the turbine (120) comprising:
multiple turbine rotors comprising multiple turbine disks (180) and multiple turbine blades (184) coupled to an outer surface of each of the multiple turbine disks (180);
multiple turbine vanes disposed between the multiple blades (184); and
a turbine casing (102b) configured to accommodate the turbine rotors and the turbine vanes guiding a flow of the combustion gas, the multiple turbine rotors being arranged in multiple stages and mounted on a circumferential surface of a tie rod and being rotated by the combustion gas supplied from the combustor (104) during operation of a gas turbine (100);
a turbine exhaust unit (106) coupled to one side of the turbine casing (102b) and configured to discharge the combustion gas passing through the turbine rotors; and
a turbine exhaust unit (106) supporting device (1000, 2000) including a casing supporting block unit (1100) installed on an outer circumferential surface of the turbine casing (102b), an exhaust unit supporting block unit (1200) spaced from the casing supporting block unit (1100) and installed on an outer circumferential surface of the turbine exhaust unit (106), a rotary coupler (1300) having a first end rotatably coupled to the casing supporting block unit (1100) and a second end rotatably coupled to the exhaust unit supporting block unit (1200).

12. The turbine according to claim 11, wherein the casing supporting block unit (1100) comprises a casing supporting block (1101) fixed along an external circumference of the turbine casing (102b) and a pair of casing fixing pieces (1102) protruding from one side surface of the casing supporting block (1101).

13. The turbine according to any one of claims 11 to 12, wherein the exhaust unit supporting block unit (1200) comprises an exhaust unit supporting block (1201) fixed along an external circumference of the turbine exhaust unit (106), and an exhaust unit fixing piece (1202) protruding toward the turbine casing (102b) from one side surface of the exhaust unit supporting block (1201).

14. The turbine according to claim 13, insofar as dependent on claim 12, wherein a first connection hole (1102a) is formed to extend through the casing fixing piece (1102),
a second connection hole (1205a, 1205b) is formed to extend through the exhaust unit fixing piece (1202), and
the rotary coupler (1300) includes a connection rod (1301, 2301) respective ends of which are provided with a first bolt hole (1302) and a second bolt hole (1302, 1307) that respectively communicate with the first connection hole (1102a) and the second connection hole (1205a, 1205b), a first connection pin (1303) inserted into the first connection hole (1102a) and the first bolt hole (1302), and a second connection pin (1308) inserted into the second connection hole (1205a, 1205b) and the second bolt hole (1302, 1307).

15. A gas turbine (100) comprising:
a compressor (110) taking in air and compressing the air to produce compressed air;
a combustor (104) burning fuel using the compressed air supplied from the compressor (110) to produce combustion gas; and
a turbine (120) rotated by the combustion gas supplied from the combustor (104) and configured to include: a turbine rotor including multiple turbine disks (180) and multiple turbine blades (184) coupled to an outer surface of each of the multiple turbine disks (180); multiple turbine vanes disposed between the multiple blades (184); a turbine casing (102b) configured to accommodate the turbine rotor mounted in multiple stages on an outer circumferential surface of a tie rod and rotated by the combustion gas supplied from the combustor (104) during operation of the gas turbine (100) and the turbine vanes guiding a flow of the combustion gas; a turbine exhaust unit (106) coupled to one side of the turbine casing (102b) and configured to discharge the combustion gas passing through the turbine rotor; and a turbine exhaust unit (106) supporting device (1000, 2000) including a casing supporting block unit (1100) installed on an circumferential surface of the turbine casing (102b), an exhaust unit supporting block unit (1200) spaced from the casing supporting block unit (1100) and installed on an outer circumferential surface of the turbine exhaust unit (106), and a rotary coupler (1300) having a first end rotatably coupled to the casing supporting block unit (1100) and a second end rotatably coupled to the exhaust unit supporting block unit (1200).

## Patentansprüche

1. Turbinenabgaseinheit-Stützvorrichtung (1000, 2000), die an einer Rückseite eines Turbinengehäuses (102b) installiert ist, um eine Turbinenabgaseinheit (106) zu stützen, durch die Abgas, das durch eine Turbine (120) strömt, ausgestoßen wird, wobei die Stützvorrichtung (1000, 2000) Folgendes umfasst:
eine Gehäuse-Stützblockeinheit (1100), die an einer Außenumfangsfläche des Turbinengehäuses (102b) installiert ist;
eine Abgaseinheit-Stützblockeinheit (1200), die von der Gehäuse-Stützblockeinheit (1100) beabstandet ist und an einer Außenumfangsfläche der Turbinenabgaseinheit (106) installiert ist; und
einen Drehkoppler (1300), der ein erstes Ende, das drehbar mit der Gehäuse-Stützblockeinheit (1100) gekoppelt ist, und ein zweites Ende, das drehbar mit der Abgaseinheit-Stützblockeinheit (1200) gekoppelt ist, aufweist.

2. Vorrichtung (1000, 2000) nach Anspruch 1, wobei die Gehäuse-Stützblockeinheit (1100) einen Gehäuse-Stützblock (1101), der entlang eines Außenumfangs des Turbinengehäuses (102b) befestigt ist, und ein Paar Gehäuse-Befestigungsstücke (1102), die von einer Seitenfläche des Gehäuse-Stützblocks (1101) vorstehen, umfasst.

3. Vorrichtung (1000, 2000) nach einem der vorhergehenden Ansprüche, wobei die Abgaseinheit-Stützblockeinheit (1200) einen Abgaseinheit-Stützblock (1201), der entlang eines Außenumfangs der Turbinenabgaseinheit (106) befestigt ist, und ein Abgaseinheit-Befestigungsstück (1202), das von einer Seitenfläche des Abgaseinheit-Stützblocks (1201) in Richtung des Turbinengehäuses (102b) vorsteht, umfasst.

4. Vorrichtung (1000, 2000) nach Anspruch 3, sofern abhängig von Anspruch 2, wobei ein erstes Verbindungsloch (1102a) so ausgebildet ist, dass es sich durch die Gehäuse-Befestigungsstücke (1102) erstreckt,
ein zweites Verbindungsloch (1205a, 1205b) so ausgebildet ist, dass es sich durch das Abgaseinheit-Befestigungsstück (1202) erstreckt,
der Drehkoppler (1300) eine Verbindungsstange (1301, 2301), deren jeweilige Enden mit einem ersten Bolzenloch (1302) und einem zweiten Bolzenloch (1302, 1307) versehen sind, die jeweils mit dem ersten Verbindungsloch (1102a) und dem zweiten Verbindungsloch (1205a, 1205b) in Verbindung stehen,
einen ersten Verbindungsstift (1303), der in das erste Verbindungsloch (1102a) und das erste Bolzenloch (1302) eingesetzt ist, und
einen zweiten Verbindungsstift (1308), der in das zweite Verbindungsloch (1205a, 1205b) und das zweite Bolzenloch (1302, 1307) eingesetzt ist, umfasst.

5. Vorrichtung (1000, 2000) nach Anspruch 4, ferner umfassend eine erste Stiftbefestigungsmutter (1304) und eine zweite Stiftbefestigungsmutter (1309), die jeweils an einem ersten Ende des ersten Verbindungsstifts (1303) und einem ersten Ende des zweiten Verbindungsstifts (1308) angeordnet sind und konfiguriert sind, um jeweils den ersten Verbindungsstift (1303) und den zweiten Verbindungsstift (1308) zu befestigen.

6. Vorrichtung (1000, 2000) nach einem der Ansprüche 3 bis 5, wobei der Abgaseinheit-Stützblock (1201) Folgendes umfasst:
einen Längenbefestigungsblock (1201a), der entlang einer Längsrichtung der Turbinenabgaseinheit (106) gestreckt ist und an der Turbinenabgaseinheit (106) an einem ersten Ende davon befestigt ist; und
einen Außenumfangsbefestigungsblock (1201b), der sich in einer Umfangsrichtung der Turbinenabgaseinheit (106) von einem zweiten Ende des Längenbefestigungsblocks (1201a) erstreckt.

7. Vorrichtung (1000, 2000) nach Anspruch 6, wobei das Abgaseinheit-Befestigungsstück (1202) Folgendes umfasst:
ein Außenumfangsbefestigungsstück (1203), das an dem Außenumfangsbefestigungsblock (1201b) an einem ersten Ende davon befestigt ist und dazu konfiguriert ist, in Richtung der Turbinenabgaseinheit (106) vorzustehen;
ein Längenbefestigungsstück (1204, 2204), das in einer Längsrichtung der Turbinenabgaseinheit (106) von einem zweiten Ende des Außenumfangsbefestigungsstücks vorsteht; und
ein Verbindungsstück (1205), das an einem ersten Ende des Längenbefestigungsstücks (1204, 2204) ausgebildet ist und mit der Verbindungsstange (1301, 2301) verbunden ist.

8. Vorrichtung (1000, 2000) nach Anspruch 7, wobei das Längenbefestigungsstück (1204, 2204) Folgendes umfasst:
eine dreieckige horizontale Stützplatte, die mit dem Außenumfangsstück an dessen erstem Ende gekoppelt ist, und
eine vertikale Stützplatte (2204b), die senkrecht mit einer Abgasseite der horizontalen Stützplatte gekoppelt ist.

9. Vorrichtung (2000) nach einem der vorhergehenden Ansprüche, ferner umfassend einen Anschlag (2400), der an einer unteren Fläche der Verbindungsstange (2301) ausgebildet ist, um einen Drehwinkel der Verbindungsstange (2301) zu begrenzen.

10. Vorrichtung (2000) nach Anspruch 9, wobei eine Seite des Anschlags (2400) mit der Verbindungsstange (2301) gekoppelt ist und die andere Seite des Anschlags (2400) mit einer unteren Fläche der vertikalen Stützplatte (2204b) in Kontakt steht.

11. Turbine (120), die konfiguriert ist, um eine Antriebskraft zur Erzeugung von elektrischer Leistung zu erzeugen, indem sie es einem Verbrennungsgas, das von einer Brennkammer (104) zugeführt wird, ermöglicht, dort hindurchzuströmen, wobei die Turbine (120) Folgendes umfasst:
mehrere Turbinenrotoren umfassend mehrere Turbinenscheiben (180) und mehrere Turbinenschaufeln (184), die mit einer Außenfläche jeder der mehreren Turbinenscheiben (180) gekoppelt sind;
mehrere Turbinenleitschaufeln, die zwischen den mehreren Schaufeln (184) angeordnet sind;
ein Turbinengehäuse (102b), das konfiguriert ist, um die Turbinenrotoren und die Turbinenleitschaufeln, die einen Strom des Verbrennungsgases führen, aufzunehmen, wobei die mehreren Turbinenrotoren in mehreren Stufen angeordnet und an einer Umfangsfläche einer Zugstange montiert sind und durch das Verbrennungsgas, das von der Brennkammer (104) zugeführt wird, während des Betriebs einer Gasturbine (100) gedreht werden;
eine Turbinenabgaseinheit (106), die mit einer Seite des Turbinengehäuses (102b) gekoppelt und konfiguriert ist, um das Verbrennungsgas, das durch die Turbinenrotoren strömt, auszustoßen; und
eine Turbinenabgaseinheit-Stützvorrichtung (1000, 2000), umfassend:
eine Gehäuse-Stützblockeinheit (1100), die an einer Außenumfangsfläche des Turbinengehäuses (102b) installiert ist,
eine Abgaseinheit-Stützblockeinheit (1200), die von der Gehäuse-Stützblockeinheit (1100) beabstandet ist und an einer Außenumfangsfläche der Turbinenabgaseinheit (106) installiert ist, und
einen Drehkoppler (1300), der ein erstes Ende, das drehbar mit der Gehäuse-Stützblockeinheit (1100) gekoppelt ist, und ein zweites Ende, das drehbar mit der Abgaseinheit-Stützblockeinheit (1200) gekoppelt ist, aufweist.

12. Turbine nach Anspruch 11, wobei die Gehäuse-Stützblockeinheit (1100) einen Gehäuse-Stützblock (1101), der entlang eines Außenumfangs des Turbinengehäuses (102b) befestigt ist, und ein Paar Gehäuse-Befestigungsstücke (1102), die von einer Seitenfläche des Gehäuse-Stützblocks (1101) vorstehen, umfasst.

13. Turbine nach einem der Ansprüche 11 bis 12, wobei die Abgaseinheit-Stützblockeinheit (1200) einen Abgaseinheit-Stützblock (1201), der entlang eines Außenumfangs der Turbinenabgaseinheit (106) befestigt ist, und ein Abgaseinheit-Befestigungsstück (1202), das von einer Seitenfläche des Abgaseinheit-Stützblocks (1201) zum Turbinengehäuse (102b) vorsteht, umfasst.

14. Turbine nach Anspruch 13, sofern abhängig von Anspruch 12, wobei ein erstes Verbindungsloch (1102a) so ausgebildet ist, dass es sich durch das Gehäuse-Befestigungsstück (1102) erstreckt,
ein zweites Verbindungsloch (1205a, 1205b) so ausgebildet ist, dass es sich durch das Abgaseinheit-Befestigungsstück (1202) erstreckt, und
der Drehkoppler (1300) eine Verbindungsstange (1301, 2301), deren jeweilige Enden mit einem ersten Bolzenloch (1302) und einem zweiten Bolzenloch (1302, 1307) versehen sind, die jeweils mit dem ersten Verbindungsloch (1102a) und dem zweiten Verbindungsloch (1205a, 1205b) in Verbindung stehen,
einen ersten Verbindungsstift (1303), der in das erste Verbindungsloch (1102a) und das erste Bolzenloch (1302) eingesetzt ist, und
einen zweiten Verbindungsstift (1308), der in das zweite Verbindungsloch (1205a, 1205b) und das zweite Bolzenloch (1302, 1307) eingesetzt ist, umfasst.

15. Gasturbine (100), umfassend:
einen Verdichter (110), der Luft aufnimmt und die Luft verdichtet, um verdichtete Luft zu erzeugen;
eine Brennkammer (104), die Kraftstoff unter Verwendung der vom Verdichter (110) zugeführten verdichteten Luft verbrennt, um Verbrennungsgas zu erzeugen; und
eine Turbine (120), die durch das Verbrennungsgas, das von der Brennkammer (104) zugeführt wird, gedreht wird und konfiguriert ist, um Folgendes zu umfassen:
einen Turbinenrotor umfassend mehrere Turbinenscheiben (180) und mehrere Turbinenschaufeln (184), die mit einer Außenfläche jeder der mehreren Turbinenscheiben (180) gekoppelt sind;
mehrere Turbinenleitschaufeln, die zwischen den mehreren Schaufeln (184) angeordnet sind;
ein Turbinengehäuse (102b), das konfiguriert ist, um den Turbinenrotor, der in mehreren Stufen an einer Außenumfangsfläche einer Zugstange montiert ist und durch das Verbrennungsgas, das von der Brennkammer (104) zugeführt wird, während des Betriebs der Gasturbine (100) gedreht wird, und die Turbinenleitschaufeln, die einen Strom des Verbrennungsgases führen, aufzunehmen;
eine Turbinenabgaseinheit (106), die an eine Seite des Turbinengehäuses (102b) gekoppelt ist und konfiguriert ist, um das Verbrennungsgas, das durch den Turbinenrotor strömt, auszustoßen; und
eine Turbinenabgaseinheit-Stützvorrichtung (1000, 2000), umfassend:
eine Gehäuse-Stützblockeinheit (1100), die an einer Außenumfangsfläche des Turbinengehäuses (102b) installiert ist,
eine Abgaseinheit-Stützblockeinheit (1200), die von der Gehäuse-Stützblockeinheit (1100) beabstandet ist und an einer Außenumfangsfläche der Turbinenabgaseinheit (106) installiert ist, und
einen Drehkoppler (1300), der ein erstes Ende, das drehbar an die Gehäuse-Stützblockeinheit (1100) gekoppelt ist, und ein zweites Ende, das drehbar an die Abgaseinheit-Stützblockeinheit (1200) gekoppelt ist, aufweist.

## Revendications

1. Dispositif de support d'une unité d'échappement de turbine (1000, 2000), installé sur un côté arrière d'un carter de turbine (102b) pour supporter une unité d'échappement de turbine (106) par laquelle sont évacués des gaz d'échappement passant dans une turbine (120), ledit dispositif de support (1000, 2000) comprenant :
une unité de bloc de support de carter (1100) installée sur une surface circonférentielle extérieure du carter de turbine (102b) ;
une unité de bloc de support d'unité d'échappement (1200) espacée de l'unité de bloc de support de carter (1100) et installée sur une surface circonférentielle extérieure de l'unité d'échappement de turbine (106) ; et
un coupleur rotatif (1300) ayant une première extrémité raccordée de manière rotative à l'unité de bloc de support de carter (1100) et une deuxième extrémité raccordée de manière rotative à l'unité de bloc de support d'unité d'échappement (1200).

2. Dispositif (1000, 2000) selon la revendication 1, où l'unité de bloc de support de carter (1100) comprend un bloc de support de carter (1101) fixé le long d'une circonférence extérieure du carter de turbine (102b) et une paire de pièces de fixation de carter (1102) faisant saillie d'une surface latérale du bloc de support de carter (1101).

3. Dispositif (1000, 2000) selon l'une des revendications précédentes, où l'unité de bloc de support d'unité d'échappement (1200) comprend un bloc de support d'unité d'échappement (1201) fixé le long d'une circonférence extérieure de l'unité d'échappement de turbine (106), et une pièce de fixation d'unité d'échappement (1202) faisant saillie vers le carter de turbine (102b) depuis une surface latérale du bloc de support d'unité d'échappement (1201).

4. Dispositif (1000, 2000) selon la revendication 3, si dépendante de la revendication 2, où un premier trou de connexion (1102a) est formé de manière à traverser les pièces de fixation de carter (1102),
un deuxième trou de connexion (1205a, 1205b) est formé de manière à traverser la pièce de fixation d'unité d'échappement (1202),
le coupleur rotatif (1300) comprend une tringle de connexion (1301, 2301) dont les extrémités respectives sont pourvues d'un premier trou de boulon (1302) et d'un deuxième trou de boulon (1302, 1307) communiquant respectivement avec le premier trou de connexion (1102a) et le deuxième trou de connexion (1205a, 1205b),
une première goupille de connexion (1303) insérée dans le premier trou de connexion (1102a) et le premier trou de boulon (1302), et
une deuxième goupille de connexion (1308) insérée dans le deuxième trou de connexion (1205a, 1205b) et le deuxième trou de boulon (1302, 1307).

5. Dispositif (1000, 2000) selon la revendication 4, comprenant en outre une premier écrou de fixation de goupille (1304) et un deuxième écrou de fixation de goupille (1309) disposés respectivement à une première extrémité de la première goupille de connexion (1303) et une première extrémité de la deuxième goupille de connexion (1308), et prévus pour fixer respectivement la première goupille de connexion (1303) et la deuxième goupille de connexion (1308).

6. Dispositif (1000, 2000) selon l'une des revendications 3 à 5, où le bloc de support d'unité d'échappement (1201) comprend : un bloc de fixation longitudinal (1201a) s'étendant dans le sens de la longueur de l'unité d'échappement de turbine (106) et fixé à l'unité d'échappement de turbine (106) à une première extrémité de celui-ci ; et un bloc de fixation périphérique extérieur (1201b) s'étendant dans la direction circonférentielle de l'unité d'échappement de turbine (106) depuis une deuxième extrémité du bloc de fixation longitudinal (1201a).

7. Dispositif (1000, 2000) selon la revendication 6, où la pièce de fixation d'unité d'échappement (1202) comprend : une pièce de fixation périphérique extérieure (1203) fixée au bloc de fixation périphérique extérieur (1201b) à une première extrémité de celle-ci et prévue pour faire saillie vers l'unité d'échappement de turbine (106) ; une pièce de fixation longitudinale (1204, 2204) faisant saillie dans le sens de la longueur de l'unité d'échappement de turbine (106) depuis une deuxième extrémité de la pièce de fixation périphérique extérieure ; et une pièce de connexion (1205) formée à une première extrémité de la pièce de fixation longitudinale (1204, 2204) et raccordée à la tringle de connexion (1301, 2301).

8. Dispositif (1000, 2000) selon la revendication 7, où la pièce de fixation longitudinale (1204, 2204) comprend : une plaque de support horizontale triangulaire raccordée à la pièce périphérique extérieure à une première extrémité de celle-ci et une plaque de support verticale (2204b) raccordée perpendiculairement à un côté d'échappement de la plaque de support horizontale.

9. Dispositif (2000) selon l'une des revendications précédentes, comprenant en outre une butée (2400) formée sur une surface inférieure de la tringle de connexion (2301) pour limiter un angle de pivotement de la tringle de connexion (2301).

10. Dispositif (2000) selon la revendication 9, où un côté de la butée (2400) est relié à la tringle de connexion (2301), et l'autre côté de la butée (2400) est en contact avec une surface inférieure de la plaque de support verticale (2204b).

11. Turbine (120), prévue pour générer une force d'entraînement utilisée pour la génération d'énergie électrique en permettant le passage de gaz de combustion refoulés par une chambre de combustion (104), ladite turbine (120) comprenant :
une pluralité de rotors de turbine comprenant une pluralité de disques de turbine (180) et une pluralité d'aubes de turbine (184) raccordées à une surface extérieure de chaque disque de la pluralité de disques de turbine (180) ;
une pluralité d'ailettes de turbine disposées entre les aubes de la pluralité d'aubes (184) ; et
un carter de turbine (102b) prévu pour loger les rotors de turbine et les ailettes de turbine guidant un flux de gaz de combustion, la pluralité de rotors de turbine étant disposés en une pluralité d'étages et montés sur une surface circonférentielle d'une barre de liaison, et
entraînés en rotation par les gaz de combustion refoulés de la chambre de combustion (104) pendant le fonctionnement d'une turbine à gaz (100) ;
une unité d'échappement de turbine (106) raccordée à un côté du carter de turbine (102b) et prévue pour évacuer les gaz de combustion traversant les rotors de turbine ; et
un dispositif de support (1000, 2000) d'unité d'échappement de turbine (106) comprenant une unité de bloc de support de carter (1100) installée sur une surface circonférentielle extérieure du carter de turbine (102b), une unité de bloc de support d'unité d'échappement (1200) espacée de l'unité de bloc de support de carter (1100) et installée sur une surface circonférentielle extérieure de l'unité d'échappement de turbine (106), un coupleur rotatif (1300) ayant une première extrémité raccordée de manière rotative à l'unité de bloc de support de carter (1100) et une deuxième extrémité raccordée de manière rotative à l'unité de bloc de support d'unité d'échappement (1200).

12. Turbine selon la revendication 11, où l'unité de bloc de support de carter (1100) comprend un bloc de support de carter (1101) fixé le long d'une circonférence extérieure du carter de turbine (102b) et une paire de pièces de fixation de carter (1102) faisant saillie d'une surface latérale du bloc de support de carter (1101).

13. Turbine selon la revendication 11 ou la revendication 12, où l'unité de bloc de support d'unité d'échappement (1200) comprend un bloc de support d'unité d'échappement (1201) fixé le long d'une circonférence extérieure de l'unité d'échappement de turbine (106), et une pièce de fixation d'unité d'échappement (1202) faisant saillie vers le carter de turbine (102b) depuis une surface latérale du bloc de support d'unité d'échappement (1201).

14. Turbine selon la revendication 13, si dépendante de la revendication 12, où un premier trou de connexion (1102a) est formé de manière à traverser la pièce de fixation de carter (1102),
un deuxième trou de connexion (1205a, 1205b) est formé de manière à traverser la pièce de fixation d'unité d'échappement (1202), et
le coupleur rotatif (1300) comprend une tringle de connexion (1301, 2301) dont les extrémités respectives sont pourvues d'un premier trou de boulon (1302) et d'un deuxième trou de boulon (1302, 1307) communiquant respectivement avec le premier trou de connexion (1102a) et le deuxième trou de connexion (1205a, 1205b), une première goupille de connexion (1303) insérée dans le premier trou de connexion (1102a) et le premier trou de boulon (1302), et une deuxième goupille de connexion (1308) insérée dans le deuxième trou de connexion (1205a, 1205b) et le deuxième trou de boulon (1302, 1307).

15. Turbine à gaz (100), comprenant :
un compresseur (110) aspirant de l'air et comprimant l'air pour produire de l'air comprimé ;
une chambre de combustion (104) brûlant un combustible au moyen de l'air comprimé refoulé par le compresseur (110) pour produire des gaz de combustion ; et
une turbine (120) entraînée en rotation par les gaz de combustion refoulés de la chambre de combustion (104) et prévue pour comprendre : un rotor de turbine présentant une pluralité de disques de turbine (180) et une pluralité d'aubes de turbine (184) raccordées à une surface extérieure de chaque disque de la pluralité de disques de turbine (180) ; une pluralité d'ailettes de turbine disposées entre les aubes de la pluralité d'aubes (184) ; un carter de turbine (102b) prévu pour loger le rotor de turbine monté en une pluralité d'étages sur une surface circonférentielle d'une barre de liaison, et entraîné en rotation par les gaz de combustion refoulés de la chambre de combustion (104) pendant le fonctionnement de la turbine à gaz (100), et les ailettes de turbine guidant un flux de gaz de combustion ; une unité d'échappement de turbine (106) raccordée à un côté du carter de turbine (102b) et prévue pour évacuer les gaz de combustion traversant le rotor de turbine ; et un dispositif de support (1000, 2000) d'unité d'échappement de turbine (106) comprenant une unité de bloc de support de carter (1100) installée sur une surface circonférentielle du carter de turbine (102b), une unité de bloc de support d'unité d'échappement (1200) espacée de l'unité de bloc de support de carter (1100) et installée sur une surface circonférentielle extérieure de l'unité d'échappement de turbine (106), et un coupleur rotatif (1300) ayant une première extrémité raccordée de manière rotative à l'unité de bloc de support de carter (1100) et une deuxième extrémité raccordée de manière rotative à l'unité de bloc de support d'unité d'échappement (1200).
